# EUROPEAN PATENT SPECIFICATION

(11) **EP 1 990 939 B1**
(45) Date of publication and mention of the grant of the patent: **10.02.2010**
(21) Application number: 07425273.5
(22) Date of filing: 10.05.2007
(51) Int. Cl.: H04J 3/16, H04L 12/46, H04L 29/06

(54) **A method for transmitting multi standard data traffic over a communication network**
Verfahren zur Übertragung von Multistandarddaten über ein Kommunikationsnetzwerk
Procédé de transmission de trafic de données multistandard au travers d'un réseau de communication

(43) Date of publication of application: 12.11.2008
(73) Proprietor: Nokia Siemens Networks S.p.A., 20060 Cassina de'Pecchi (MI) (IT)
(72) Inventor: Bottiroli, Andrea, 20060 Gorgozola (MI) (IT)
(74) Representative: Kley, Hansjörg

(56) References cited:
- WO-A-01/69834
- US-A1- 2006 153 244

## Description

The invention relates to a method for transmitting multi-standard data traffic over a communication network according to the preamble of claim 1 as well as a network according to claim 8 for carrying out said method.

Communication networks capable of supporting multi-standard traffic (i.e. ITU-T, IEEE and others) are becoming increasingly popular with the ever-increasing need of supporting in a transparent manner digital signal flows related to different types of services (voice, data, multimedia in general). Multi standard traffic is also denoted by hybrid traffic.

Conventional, technology-specific interface solutions become increasingly unable to deal with the problems inherent in managing high-throughput networks required to support hybrid standards.

In the scenario outlined in the foregoing, the need is strongly felt for arrangements adapted to provide a single common solution to enable the transport of hybrid traffic, within the framework of a high throughput network that permits multi-standard convergence.

WO 2001/069834 A1 [D1] describes a scheme and a method for transporting hybrid data over optical networks. The schema comprises a frame containing different types of hybrid data. These types are sequentially aligned fragments of packets of that hybrid data. Each fragment within the frame is accessible via an offset.

In US 2006/0153244 A1 [D2] a method is disclosed for transmiting data in acommunication system adapted to receive a first type of data having two data streams with different clocks and a second type of data.

Starting with the teachings in D1, it is therefore an object of the present invention to provide an improvement regarding less complexity. The solution according to WO 2001/069834 A1 [D1] is complex in the sense, since for each fragment within a frame a offset has to be provided; furthermore, the solution according to D1 is bound to a given transport technology, in this case optical networks SONET/SDH.

According to the present invention, that object is achieved by means of a method having the features set forth in claim 1 for the method and in claim 8 for a network.

In comparison with conventional arrangements, where data and voice are caused to "converge" by causing the "TDM world" (i.e. PDH/SDH hierarchies) to converge to the "packet world" or vice versa, an interesting feature of the arrangement described herein lies in that an alternative type of network is introduced, based on Physical Data Packets (PDPs), thus giving rise to a network which emulates circuits via PDPs. The TDM world and the packet world are then caused to converge towards that new network type.

### Brief description of the annexed representations

The invention will now be described, by way of example only, with reference to the annexed figures of drawing, wherein:
- figure 1 is a schematic diagram representative of data management within the framework of a network as described herein,
- figure 2, including four sections designated a), b), c), and d) shows various types of physical data packets (PDPs) as used within the framework of the network described herein,
- figure 3 details certain features of the physical data packet types shown in figure 2,
- figure 4 is a block diagram representative of implementation of a Cyclical Redundancy Code (CRC) for use in the physical data packets (PDPs) of figures 2 and 3,
- figure 5 is a functional diagram representative of data hierarchy within the framework of the network described herein,
- figure 6 is representative of the structure of net equipment in the network described herein,
- figure 7 is representative of data hierarchy corresponding to the structure of net equipment as shown in figure 6, and
- figures 8 and 9 are further representative of the topology of the network as described herein.

### Detailed description of preferred embodiments

The following is detailed description of certain embodiments of a Multiple User Standard Adaptive (MUSA) network that permits multi standard convergence over a high throughput network.

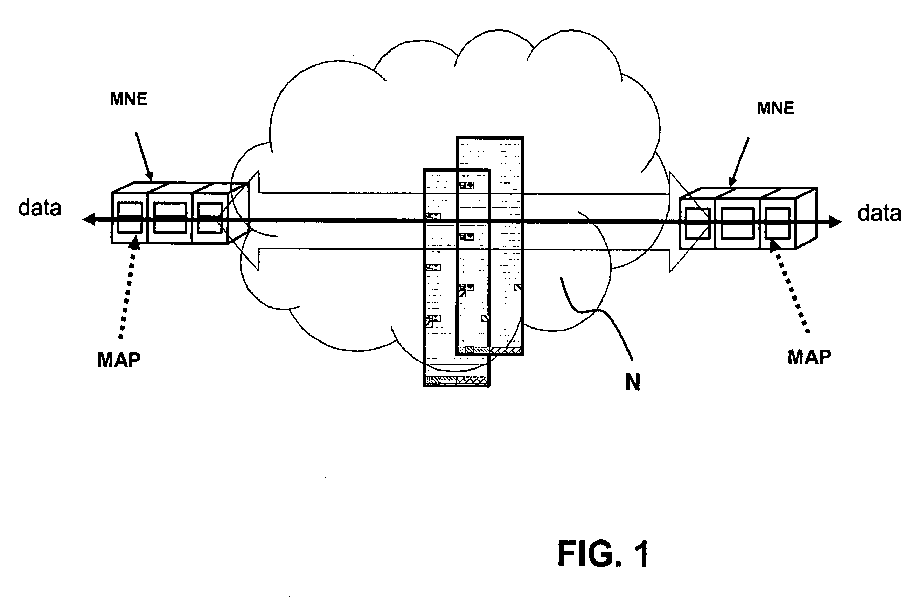

In brief, the network in question, designated N as a whole in figure 1, is based on Physical Data Packet (PDP) transport. These -- physical - packets represent the basic blocks managed by the network equipment, designated MNE located at the various access points MAP of the network N.

Data are conveyed transparently over the network N which processes only data packets. As better detailed in the following, different types of ITU-T, IEEE and other standards can be mapped into PDPs and transparently routed within the network N.

Operation of the network N is based on the capability of transporting different types of Physical Data Packets (PDPs).

The designation "physical" highlights that these packets are perceived and transported as packets by the "physical" layer of the network.

This means that all the operations performed within the network N to deliver the original traffic from one access point to another, as for instance routing, are performed directly on PDPs without any specific attention being paid to the particular type of traffic transported therein.

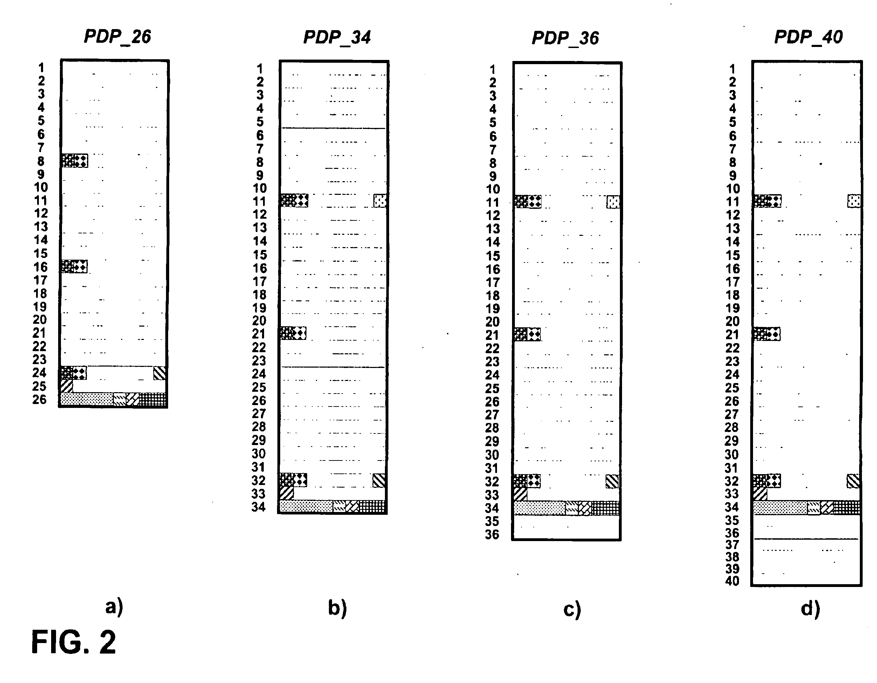

The four portions of figure 2, designated a) to d), show four exemplary different PDP types designated PDP_26, PDP_34, PDP_36 and PDP_40. Irrespective of the specific type considered, the PDPs considered herein are transmitted over the network N with a constant packet rate, e.g. one packet every 125 microseconds.

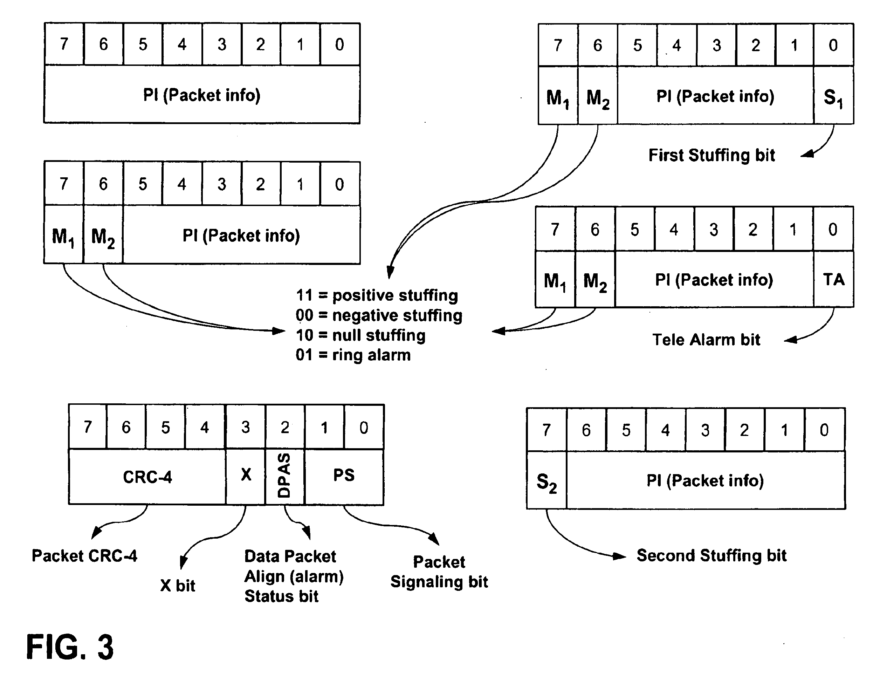

Figure 3 details the byte organization of the various PDPs considered herein.

Specifically, in a presently preferred embodiment, the Packet Info bits (i.e. the "payload" of the PDPs) are interspersed among other bits that represent homogeneous data packet information bits including:
- M₁, M₂ = message justification bits
- S₁ = first stuffing bit;
- S₂ = second stuffing bit;
- TA = tele-alarm bit;
- X = "X" bit;
- DPAS = data packet align status bit; and
- PS = packet signalling bits.

As better detailed in the following the various PDP types can be related to two different sub-types with respect to the usage of the bit designated "X bit".

For the sake of standardization, the data packet justification messages are coded as reported in Table 1 below:

**Table 1 - Justification message code**

| ***Justification message*** | | ***Meaning*** | **Frame *bits*** | |
|---|---|---|---|---|
| **M₁** | **M₂** | | **S₁** | **S₂** |
| 0 | 0 | Negative stuffing | PI | PI |
| 0 | 1 | AIS inserted alarm | PI | filling |
| 1 | 0 | Null stuffing | filling | PI |
| 1 | 1 | Positive stuffing | filling | filling |

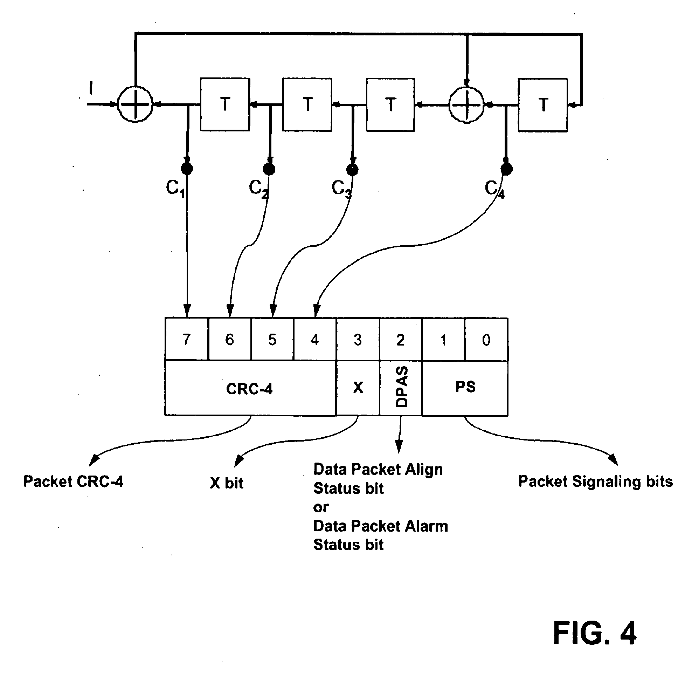

The block diagram of figure 4 is representative of how a Cyclical Redundancy Code (CRC) may be calculated and inserted into the appropriate bits.

The specific example considered herein refers to a CRC-4 circuit implementing a generator polynomial g (x) = x⁴+x+1.

The lower portion of figure 4 also shows the packet control byte and its bit usage:

| X bit | Info bit when INFO is set to '1' otherwise filling bit |
|---|---|
| Data Packet Align Status bit | DPAO = Data Packet Align OK MESSAGE when set to '1' |
| | DPAA = Data Packet Align Alarm MESSAGE when set to '0' |
| Data Packet Request bit | DPSR = Data Packet Suppression Request MESSAGE when bit follow-down |
| | DPRR = Data Packet Rehabilitation Request MESSAGE when bit rise-up |
| Data Packet Acknowledge bit | DPSA = Data Packet Suppression Acknowledge MESSAGE when bit follow-down |
| | DPRA = Data Packet Rehabilitation Acknowledge MESSAGE when bit rise-up |

All the various physical data packets (PDPs) have an identical repetition period of e.g. 125 microseconds sec.

In the case of PDP_26 (as shown in figure 2a), which his comprised of 26 bytes (208 bits) the resulting throughput is 1,664 Kbit/s.

The insertion of one asynchronous 1.552 Mbit/s signal into a PDP 26 frame is obtained with a positive/negative justification method.

The 1,552 Kbit/s signal can be mapped into a 1,664 Kbit/s signal by inserting 194 information bits in one PDP_26 packet as shown in figure 2a. The other 14 bits (194+14=208 bits) are used as follows:
- 6 bits for three couples of stuffing messages;
- 1 bit for the S2 stuffing bit;
- 1 bit for alarm transport;
- 2 bits for signalling transport;
- 4 bits for CRC transport.

When the info bit is set "0", the "X" bit (bit 3 of byte 26) is not used, so that only 193 information bits can be inserted. This corresponds to managing one asynchronous 1.554 Mbit/s signal for each PDP_26.

This configuration can be used to map one asynchronous T1 signal without using a transport frame.

A PDP_34 data packet as shown in figure 2 b) is comprised of 34 bytes (272 bits) which corresponds (in the case of repetition period of 125 microseconds) to a throughput of 2,176 Kbits/s.

The insertion of one asynchronous 2.064 Mbit/s signal into a PDP_34 frame is obtained again with a positive/negative justification method. The 2,064 Kbit/s signal can be mapped into a 2,176 Kbit/s signal by inserting 257 information bit in one PDP_34 packet, while the other 15 bits (257 + 15 = 272 bits) used as follows:
- 6 bits for three couples of stuffing messages;
- 1 bit for the S2 stuffing bit;
- 1 bit for tele-alarm transport;
- 1 bit for alarm transport;
- 2 bits for signalling transport; and
- 4 bits for CRC transport.

Again, when the INFO bit is set to "0", the "X" bit (bit 3 of byte 34) is not used so that only 256 information bits can be inserted. This permits to manage one asynchronous 2.048 Mbit/s signal for each PDP_34 message. This configuration can be used to map one asynchronous E1 signal without using a transport frame.

The PDP_36 data packet of the figure 2 c) is comprised of 36 bytes (288 bits), so that its throughput (with a repetition period of 125 microseconds) is 2,304 Kbits/s.

The insertion of one asynchronous 2.192 Mbit/s signal into a PDP_36 frame is obtained again with a positive/negative justification method. A 2,192 Kbit/s can be mapped into 2,304 Kbit/s signal by inserting 274 information bit in one PDP_36 packet.

The other 14 bits (274 + 14 = 288 bits) are used as follows:
- 6 bits for three couples of stuffing messages;
- 1 bit for the S2 stuffing bit;
- 1 bit for alarm transport;
- 2 bits for signalling transport; and
- 4 bits for CRC transport.

Again, when the INFO bit is set to "0" the "X" bit (bit 3 of byte 34) is not used so that only 273 information bits can be inserted. In that way one asynchronous 2.184 Mbit/s signal can be managed in PDP_34 packets.

Finally, the PDP_40 packet of figure 2d) is comprised of 40 bytes (320 bits) which corresponds (in the case of repetition period of 125 microseconds) to a throughput of 2,560 Kbit/s.

The insertion of one asynchronous 2.448 Mbit/s signal in PDP_40 frame is obtained once again with the positive/negative justification method. The 2,448 Kbit/s signal can be mapped into a 2,560 Kbit/s signal by inserting 306 information bits in one PDP_40 packet.

The other 14 bits (306 + 14 = 320 bits) are used as follows:
- 6 bits for three couples of stuffing messages,
- 1 bit for the S2 stuffing bit;
- 1 bit for alarm transport;
- 2 bits for signalling transport; and
- 4 bits for CRC transport.

Again, if the INFO bit is set to "0" the "X" bit (bit 3 of byte 34) is not used, so that only 305 information bits can be inserted. This permits to managing one asynchronous 2.440 Mbit/s signal with PDP_40 packets.

To sum up, the various physical data packet (PDP) formats described herein have a common structure comprised of:
- I) a set of information bits for carrying, as the "payload" of the physical data packet, the multi-standard data traffic; this set of information bits may be of two different sub-types (sub type A; sub-type B) depending on whether the "X" bit is used or not, and
- II) a set of data packet information bits typically including (in the examples considered herein) 14 or 15 bits such as e.g. bits for:
   - stuffing messages;
   - alarm (and possibly tele-alarm) transport;
   - signalling transport;
   - CRC transport.

Each physical data packet (PDP) type considered in the foregoing is characterized by a set of features (qualifying information) that are typically transferred within the network N outside the PDPs: i.e. the qualifying information of a given PDP is not included in the PDP.

These features typically include:
- data packet enable (DPE) - 1 bit;
- data packet info (DPI) - 1 bit;
- data packet type (DPT) - 2 bits;
- data packet alarm (DPA) - 1 bit;
- data packet quality (DPQ) - 3 bits.

The Data Packet Enable (DPE) bit indicates if the PDP is enabled or not (e.g. DPE = "0" means PDP disabled while DPE = "1" means PDP enabled).

The DPI info shows if the X bit is used or not. For instance DPI = "0" means that the "X" bit is not used, while DPI = "1" means that the "X" bit is used.

The DPT information indicates what PDP type is being used. For instance, with reference to the exemplary embodiments considered herein, where four PDP types are considered,
- DPT = "00" means PDP_26;
- DPT = "01" means PDP_34;
- DPT = "10" means PDP_36; and
- DPT = "11" means PDP_40.

The DPA information indicates whether the PDP is alarmed or not. For instance DPA = "0" means that the PDP is alarmed while DPA = "1" means the PDP is not alarmed.

The DPQ information indicates the PDP service quality class, e.g.:
DPQ = "000" means priority 0;
DPQ = "001" means priority 1;
DPQ = "010" means priority 2;
DPQ = "011" means priority 3;
DPQ = "100" is to be defined;
DPQ = "101" is to be defined;
DPQ = "110" means multi-PDP quality; and
DPQ = "111" means that no quality has been assigned.

Those skilled in the art will promptly appreciate that the number of bits allotted to each type of information set can be varied according to the information to be conveyed.

For instance, more than three bits can be allotted to the DPQ information if a very fine-grained QoS structure is to be conveyed requiring, for instance, four bits (up to 16 different QoS levels).

If the tributary data throughput to be conveyed over the network N is greater than the throughput which can be accommodated by a single physical data packet, a Multiple Physical Data Packet (MPDP) structure is defined. This means that data flow bytes are subdivided into different physical data packet containers (PDP-containers). Each PDP container is then inserted in one physical data packet. Generally, data flow bytes are inserted sequentially into the N PDP container payload bytes.

In order to be able to re-construct the original data flow byte sequence, additional information bytes are inserted in the containers. These include:
- Unique Word (UW) information, which makes it possible to re-synchronize the containers;
- Concatenation Overhead Octet information, which makes it possible to implement the LCAS (Link Capacity Adjustment Scheme) and VCAT (Virtual conCATenation) procedures as described in the ITU-T standard;
- Container Virtual Concatenation Octet information, which makes it possible to implement the container VCAT (C-VCAT) procedure; and
- Container Capacity Adjustment Octet information, which makes it possible to implement a container LCAS (C-LCAS) procedure.

The extra bytes mentioned in the foregoing preferably convey the following additional information
- a Multi-PDP identifier (MPDP-ID), namely a label to identify each Multi PDP;
- Data Packet Order (DP-Order) information to permit container sequence reconstruction;
- Container Control Bits (Container Suspension Request, Container Suspension Countdown, Container Align Alarm, Container Suspension Acknowledge, Container Readmission Request, Container Readmission Acknowledge, Container Align Ok, Container Readmission Countdown) to permit data flow control;
- Data Packet Frame Number (DP_FRAME_NUM) information which makes it possible to re-synchronize the containers when the containers follow different roots with different time delays when propagated over the network N.

On the receiver MNE side, using different delay memories, PDP container delay compensation and reordering can be provided.

After delay compensation and PDP-container order reconstruction, the tributary data sequence can be properly reconstructed.

Preferably, this information is not conveyed within the PDPs, but rather in the frame overhead that is handled at the physical layer ("physical layer frame"). This choice is intended to permit transfer of this information according to a time division scheme (information concerning a single PDP in each frame) in order to minimize bandwidth usage devoted to that purpose. In fact, this information varies very slowly and devoting bits within a PDP to carry it would involve unnecessary waste of useful bandwidth.

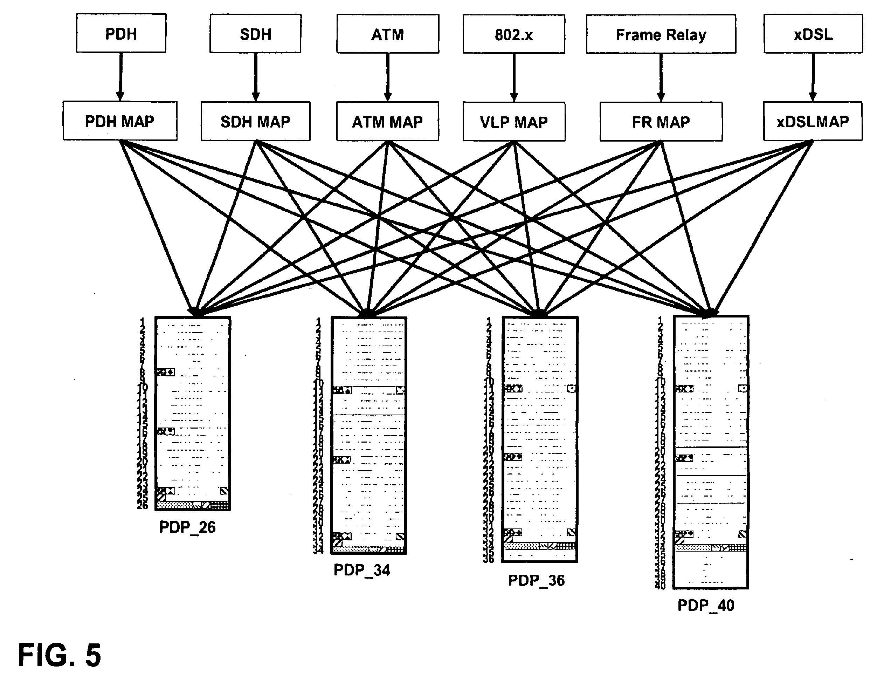

The diagram of figure 5 is representative of the data within the network N. This hierarchy is configured for handling "hybrid" traffic, that is traffic arranged according to different standards.

The diagram of figure 5 refers - by way of example only - to the possibility of conveying transparently over the network N traffic of the following types:
- PDH (Plesiochronous Data Hierarchy),
- SDH (Synchronous Data Hierarchy),
- ATM (Asynchronous Transfer Mode),
- 802.x (i.e. according to any of the IEEE 802.x standards),
- Frame Relay,
- xDSL.

The corresponding blocks labelled PDH map, are representative of the access points MAP of the network N where the input traffic is mapped (i.e. loaded) into the various types of PDPs available to be transported within the network N.

As indicated previously, the various PDPs are intended to be transmitted with a common repetition period (e.g. 125 microseconds) and mapping of the various input traffic signals takes care essentially by resorting to the positive/negative justification method described in the foregoing.

Consequently, the various PDPs play the role of physical "carriers" that to transport over the network N traffic conformant to different standards in a manner which is completely transparent to the network architecture and operational arrangement as schematically described in the following.

In general terms, any type of input traffic can be accommodated into any of the PDP types described (PDP_26, PDP_34, PDP_36, PDP_40).

The mapping process performed at each access point MAP of the network N may however select for the purposes of mapping a given type of input traffic, the PDP format which is most suitable for that purpose. The network N is thus in a position to ensure proper traffic operation in the presence of different types of PDPs, that is different types of "carriers" being simultaneously circulated over the network N.

Those of skill in the art will appreciate that, while the PDP palette described herein (including four PDP types, namely PDP_26, PDP_34, PDP_36 and PDP_40) will satisfactorily accommodate all the prevailing types of standards currently in use, additional types of "formats" of PDPs can be defined, thus increasing the number of PDP types available. Similarly, in certain operating conditions, the number of different PDPs currently used can be less than four.

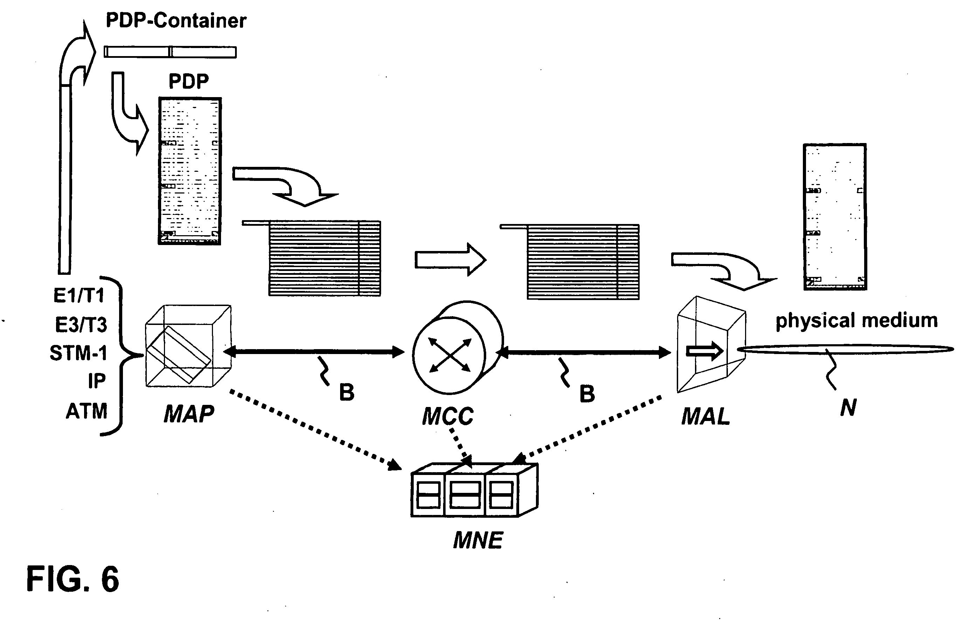

The diagram of figure 6 is representative of the basic elements included in the net equipments MNE that permit access (i.e. inputting and outputting traffic with respect) to the network N of figure 1.

In the embodiment shown, each MNE includes:
- an access point MAP;
- a cross connect element MCC, and
- an adaptation layer MAL.

The double arrows connecting the various elements MAP, MCC, and MAL are representative of bus connections B adapted to carry traffic in both directions (i.e. traffic input to the network, traffic extracted from the network N).

The access point MAP is essentially responsible for the following tasks:
- physically interfacing tributary traffic with respect to specific tributary standards,
- mapping/demapping tributary data into/from PDPs or MPDPs by means of the proper PDP containers,
- stuffing/destuffing management for each PDP signal, in order to multiplex/demultiplex those signals into/from bus aggregated signal,
- PDP-container hardware protection to select, in a protected system type, the preferred PDP container signal between the two signals received according to selection criteria,
- PDP-container path protection, to select, in a protected system type, the preferred PDP container signals between two signals received according to CRC error rate criteria,
- PDP container hitless protection management by means of PDP CRC evaluation and hitless selection after resynchronization of the containers.

The cross connector element MCC is responsible for the following tasks:
- cross connect functions of PDP signals: each incoming PDP can be switched to any outcoming PDP; preferably, the cross connect configuration is set by using software commands;
- PDP hardware protection, for selecting, in a protected system type, the preferred PDP signal between two received signals according to selection criteria (hardware failure); all PDPs belonging to the same physical link are switched simultaneously;
- PDP path protection to select, in a protected system type, the preferred PDP signal between two received signals according to CRC error rate criteria; in this case PDP are switched individually.

The designation "protected" transmission systems denotes those transmission networks wherein the same information is conveyed repeatedly (typically twice) within the network giving rise to "copies" of the information. The receiver selects the copy received with the best signal-to-noise ratio or the copy least affected by error is selected.

Certain "path" protection topologies exist wherein the two copies of the information follow essentially the same path (for instance in the case of "Frequency Diversity" where different frequencies are used for the two copies or the case of "Space Diversity" where the copies are sent via antennas that are slightly offset spatially). Other "ring" topologies exist where the two copies of the same information follow different paths within the network. In the latter case, the difference between the instants at which the two copies are received is higher and, consequently, larger memories are needed in order to compensate these higher delays.

In the specific case of PDPs, the quality of the copies received is evaluated thanks to the CRC field. At least three different methods can be resorted to in order to choose among the copies received of the same PDP:
- hardware protection,
- path protection, and
- hitless protection.

In the first instance, selection is performed by having regard to the different paths followed by the various copies of the PDPs without evaluating the quality of each individual PDP received via the CRC field.

In the second instance, the concept of PDP quality and the CRC field are used, but selection is performed without any compensation of the different delays related to the different paths followed by the various copies.

In the third instance, delays are compensated and the CRC field is evaluated. This approach is designated hitless, because passing from a PDP flow to another takes place without interruptions in the source data flow (user data flow).

These forms of protection are implemented with reference to the PDPs. Within the MAL additional forms of protection can be implemented with reference to the aggregated flow ("physical layer frame") where the quality of the flow is evaluated by means of the error correction code FEC.

To sum up, two levels of protection are managed within the network N as described, the former related to the PDPs, which is conferred to the MCC and MAP elements, the latter related to the physical layer frame which is conferred to the MAL elements.

The adaptation layer element MAL is responsible for the following tasks:
- physical layer interface management with respect to specific physical media (radio, i.e. wireless; copper, i.e. conventional cable; optical fibre, and so on) that comprise the physical links in the network N;
- assembling/de-assembling the digital "physical layer frame" (aggregate signal) transmitted over the physical links;
- coding (transmitter side) and de-coding (receiver side) the aggregate signal for error correction purposes;
- Forward Error Correction (FEC) analysis of the received signal to allow hitless switch in protected system types and proper CRC coding for monitoring performance of the physical link;
- interleaving (transmitter side) and de-interleaving (receiver side) the physical signals according to the specific physical medium; and
- protection logic and switch controls, to manage protected system types within the specific adaptation layer.

In general terms, the network N will include:
- one or more access points MAP,
- one or more cross connection elements MCC, and
- one or more adaptation layers MAL connected by buses B typically in the form of serial buses.

Of course, different types of access points MAP, cross connection elements MCC and adaptation layers MAL can be instantiated according to specific implementations.

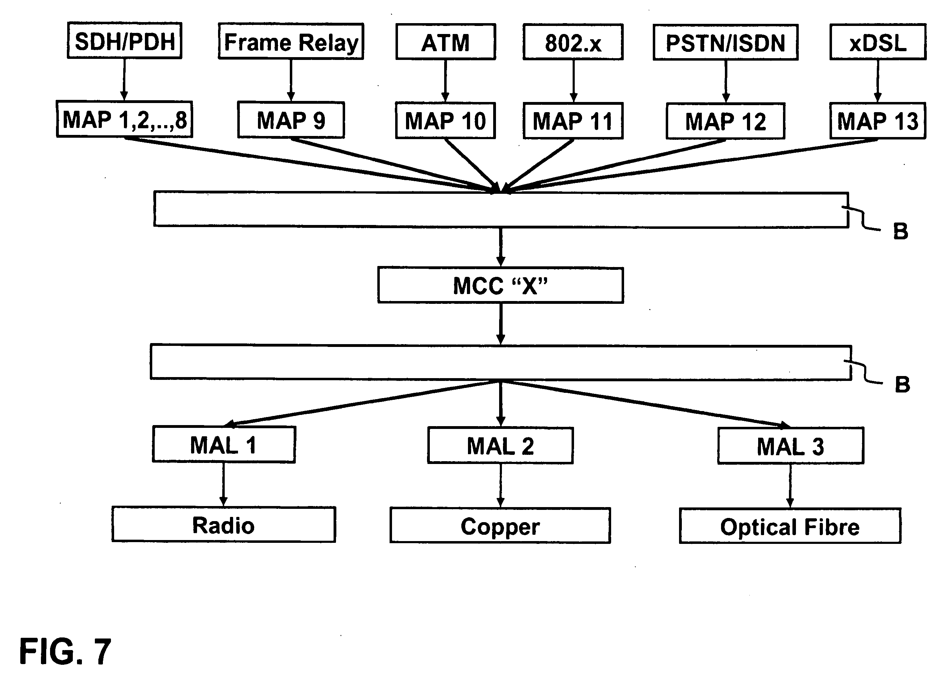

For instance, figure 7 is representative of a data hierarchy corresponding to the basic layout shown in figure 5 as properly implemented within a structural data management arrangement as shown in figure 6.

Consequently, different types of access points MAP, schematically indicated MAP 1, 2,...8; MAP 9, MAP 10; MAP 11; MAP 12; MAP 13 (the number of these elements is obviously a pure exemplary) can be instantiated with reference to the need of dealing with specific types of tributary traffic (SDH/PDH; frame relay, ATM, and so on).

Cross connection elements MCC are instantiated by taking into account the specific types of buses B intended to be managed in connection with the access points MAP and the number of adaptation layers to be managed.

The adaptation layer elements are typically instantiated with respect to specific physical media. For instance, in the exemplary arrangement shown in figure 7, three adaptation layers MAL 1, MAL 2 and MAL 3 are instantiated to deal with radio (wireless) copper (conventional cable) and optical fiber media, respectively.

A data packet status can be defined for each of the elements (MAP, MCC, MAL) defined previously for each PDP being managed.

For instance allowed status for the access point can be:
- inactive,
- stopped by others,
- self-stopped, and
- active.

For the cross connect element MCC, usually only two types of status are contemplated, namely:
- inactive,
- active.

Finally, for the adaptation layer, four status types are typically defined, namely:
- inactive,
- stopped by others,
- self-stopped, and
- active.

The data packet status of those elements is set according to messages exchanged within the network N by using the PDP structure:
- Data Packet (DP) Enable info;
- DP Suppression Acknowledge message;
- DP Suppression Request message;
- DP Rehabilitation Acknowledge message;
- DP Rehabilitation Request message.

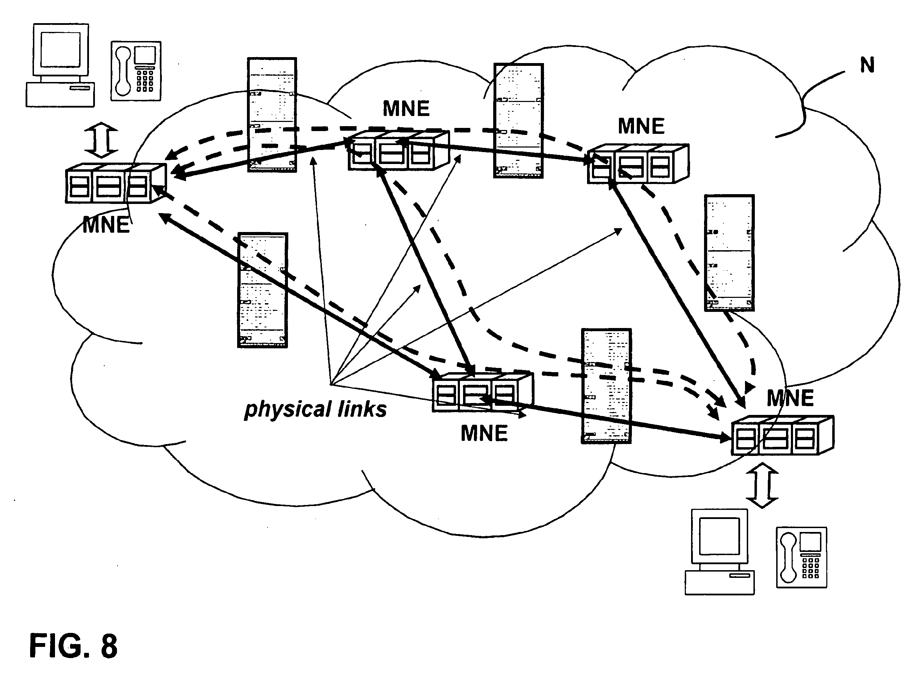

Preferably, the network N is arranged as a modular system that admits different net configurations as schematically shown in figure 8.

There, an exemplary network N of the type considered herein is shown including a plurality of network equipments MNE connected via physical links (of the same type or different types, e.g. wireless, copper cable, optical fibre).

Irrespective of the nature of the links, the various PDPs are managed identically in manner totally independent of the tributary traffic that has been mapped into them. Consequently, each PDP generated by an access point MAP and intended to be received in another given access point MAP can follow a respective route in the network N.

Preferably, a different management is allowed only for PDPs with different priority (or possibly QoS requirements): for instance PDPs carrying streaming or voice traffic will be generally given priority over PDPs carrying "best effort" traffic.

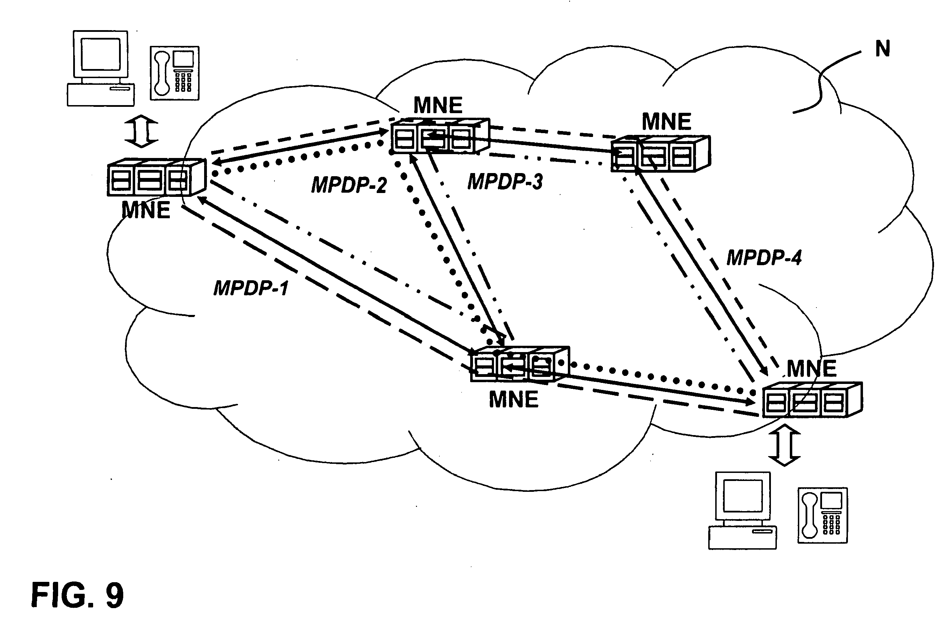

In the case of multiple PDPs (MPDPs), no specific care is usually taken to ensure that PDPs belonging to the same MPDP follow the same route within the network. Consequently, as schematically shown in figure 9, each PDP/MPDP represents in fact a sort of circuit emulation within the network N.

This kind of the handling of MPDPs leads to PDP de-synchronization within the network with consequent requirement of ensuring re-synchronization within the access points MAP for traffic outgoing from the network N.

In general terms, each MPDP can be seen as a sort of tunnel within the network N, and different PDPs belonging to the same MPDP may exhibit different delay characteristics upon reception due to different routes followed within the network N. Since each PDP represents a circuit emulation path, no PDP delay variation is introduced. Consequently, the MPDP delay is essentially dictated by the worst delay encountered among the various PDPs included in the MPDP.

Operations to be performed on PDPs within the network N include PDP hardware protection, PDP path protection, PDP control by the adaptation layer, and PDP control at the access point level.

PDP hardware protection and path protection have been already discussed previously when considering the functions allotted to the cross connect element MCC.

PDP control at the adaptation layer level takes into account the fact that the certain physical media may be highly sensitive to environment conditions, which may lead to inadequate link quality. In most instances, data quality can be re-established simply by reducing the data throughput: for instance, in radio links, this result can be achieved by changing the modulation type.

In the network N, two automatic procedures may be provided for DP suppression and DP rehabilitation in order to standardize the physical level procedure adapted to manage data throughput changes.

For instance, in the case of radio link affected by bad weather, some PDPs carried by a link adversely affected by weather conditions are suppressed having regard to data packet quality (DPQ) requirements. The routing algorithm of the network N can in that case re-route the data packets that were suppressed to take into account the new network conditions.

PDP suppression and rehabilitation can be managed both locally and globally.

In the former case (local management) the PDPs with lower data packet quality (DPQ) requirements are interrupted and restored. In the latter case (global management) a net routing protocol re-routes at least some of the PDPs suppressed using on loaded links.

PDP control at the access point level may include a function by means of which one access point MAP is able to ask the other end point (i.e. another access point) to stop data transfer into one particular PDP. This function can be used, for instance, to control data throughput in the case of a local memory early overflow alarm.

Two automatic procedures can be implemented for end-point PDP suppression and end-point PDP rehabilitation in order to standardize the physical level procedure to manage data throughput change.

As indicated, other kinds of operations can be performed on PDP containers at the access point level. These include, for instance, PDP-container hardware protection and PDP container path protection as discussed in the foregoing.

Additionally PDP-container re-synchronization and MPDP- container re-synchronization and re-ordering are preferably performed at the access point level on traffic outgoing from the network.

In the case of PDP-container re-synchronization, on the receiver side, PDP-container delay compensation is effected by using different delay memories. Preferably, PDP container re-synchronization is performed by exploiting the Unique Word (UW) and Frame Number (FRAME_NUM) information carried within the containers.

Similarly, relative delays between different PDPs containers belonging to the same MPDP is effected by using different delay memories and using, again the UW and FRAME_NUM information carried by these containers. After time re-synchronization, the proper order of the PDP containers is re-constructed by using a data packet order (DP_ORDER) information carried in the container frame.

### List of reference signs and reference numerals

- DPA: Data Packet Alarm
- DPAA: Data packet align Alarm
- DPAO: Data packet align OK
- DPAS: Data packet align status
- DPE: Data Packet Enable
- DPI: Data Packet Info
- DPQ: Data Packet Quality
- DPRA: Data Packet Rrehabilitation Acknowledge
- DPRR: Data Packet Rrehabilitation Request
- DPSA: Data Packet Suppression Acknowledge
- DPSR: Data Packet Suppression Request
- DPT: Data Packet Type
- FEC: ForwardError Correction
- LCAS: Link Capacity Adjustment Scheme
- MNE: Managing Network Equipment
- N: Network
- PS: Packet signalling
- TA: Tele Alarm
- UW: Unique Word
- VCAT: Virtual conCATenation

### List of used Acronyms

- CRC: Cyclic Redundancy Code
- MAP: (Multiple service) Access Point; access point element
- MUSA: Multiple User Standard Adaptive
- MPDP: Multiple Physical Data Packet
- PDH: Plesiochronous Digital Hierarchy
- PDP: Physical Data Packet
- PDPs: Physical Data Packets
- PDP_26: Data Packet comprising 26 Bytes
- PDP_34: Data Packet comprising 34 Bytes
- PDP_36: Data Packet comprising 36 Bytes
- DPP_40: Data Packet comprising 40 Bytes
- QoS: Quality of Service
- SDH: Synchronoous Digital Hiererachy
- TDM: Time Division Multiplex

### List of cited documents

- D1: WO 2001/069834 A1 «Hybrid data transport scheme opver optical networks» CYPRESS SEMICONDUCTOR CORP.; San Jose CA; US.
- D2: US 2006/0153244 A1 «System and mthod for multiplexing PDH and Packet Data» Assogmee: Harris Corporation

## Claims

1. A method for transmitting multi-standard data traffic (PDH, SDH, ATM, 802.x, Frame Relay, xDSL) over a communication network (N) having access point elements (MAP), the method including the steps of:
- arranging said multi-standard data traffic (PDH, SDH, ATM, 802.x, Frame Relay, xDSL) into physical data packets (PDP; PDP_26, PDP_34, PDP _36, PDP_40), said physical data packets (PDP; PDP_26, PDP_34, PDP _36, PDP_40) including a set of information bits for carrying said multi-standard data traffic and a set of data packet information bits, and
- transmitting said physical data packets (PDP; PDP_26, PDP_34, PDP _36, PDP_40) over said communication network (N) ;
where the access point elements (MAP) are instantiated to interface with data traffic according to a given standard (PDH, SDH, ATM, 802.x, Frame Relay, xDSL); **characterised in that** said physical data packets (PDP; PDP_26, PDP_34, PDP_36, PDP_40) are of different types each having a different but fixed number of bytes.

2. The method according to claim 1;
**characterised by**
the step of providing in said data packet information bits at least one sub-type identification bit (X) to distinguish two different arrangements of said multi-standard data traffic into said set of information bits, wherein different amounts of said multi-standard data traffic are arranged in said set of information bits as a function of the value of said at least one sub-type identification bit (X).

3. The method according to claim 1 or 2,
**characterised by**
the step of assembling said physical data packets (PDP) in multiple data packet structures (MPDP) for transmission over said network (N), said multiple structures (MPDP) including a plurality of said physical data packets (PDP).

4. The method according to claim 1 or 3,
**characterised by**
the step of transmitting said physical data packets (PDP) over said network with a constant packet rate.

5. The method according to claim 4,
wherein said constant packet rate is selected at one packet every 125 microseconds.

6. The method according to one of the claims 1 to 5,
wherein said set of data packet information bits includes bits selected out of:
- stuffing message bits,
- alarm transport bits,
- tele-alarm transport bits,
- signalling transport bits,
- code correction bits.

7. The method according to claim 6,
wherein said code correction bits include cyclical redundancy code (CRC) bits.

8. A communication network (N) configured for implementing the method of any of claims 1 to 7.

9. The network according to claim 9,
**characterised by**
cross connect elements (MCC) for selectively switching said physical data packets (PDP) input to the network (N) towards respective destination access points (MAP) in the network (N).

10. The network according to claim 8 or 9
**characterised by**
adaptation layer elements (MAL) instantiated to manage transmission of said physical data packets (PDP) over different physical media within said network (N).

## Patentansprüche

1. Verfahren zum Übertragen von Multistandard-Datenverkehr (PDH, SDH, ATM, 802.x, Frame Relay, xDSL) über ein Kommunikationsnetz (N) mit Zugangspunktelementen (MAP), wobei das Verfahren die folgenden Schritte umfasst:
- Anordnen des Multistandard-Datenverkehrs (PDH, SDH, ATM, 802.x, Frame Relay, xDSL) zu physischen Datenpaketen (PDP; PDP_26, PDP_34, PDP_36, PDP_40), wobei die physischen Datenpakete (PDP; PDP_26, PDP_34, PDP_36, PDP_40) eine Menge von Informationsbit zum Tragen des Multistandard-Datenverkehrs und eine Menge von Datenpaket-Informationsbit enthalten, und
- Übertragen der physischen Datenpakete (PDP; PDP_26, PDP_34, PDP_36, PDP_40) über das Kommunikationsnetz (N);
wobei die Zugangspunktelemente (MAP) so instanziiert werden, dass sie eine Schnittstelle mit Datenverkehr gemäß einem gegebenen Standard (PDH, SDH, ATM, 802.x, Frame Relay, xDSL) bilden;
**dadurch gekennzeichnet, dass** die physischen Datenpakete (PDP; PDP_26, PDP_34, PDP_36, PDP_40) von verschiedenen Typen sind und jeweils eine verschiedene, aber feste Anzahl von Byte aufweisen.

2. Verfahren nach Anspruch 1, **gekennzeichnet durch** den Schritt des Bereitstellens von mindestens einem Subtyp-Identifikationsbit (X) in den Datenpaket-Informationsbit zur Unterscheidung von zwei verschiedenen Anordnungen des Multistandard-Datenverkehrs zu der Menge von Informationsbit, wobei in der Menge von Informationsbit als Funktion des Werts des mindestens einen Subtyp-Identifikationsbit (X) verschiedene Quantitäten des Multistandard-Datenverkehrs angeordnet werden.

3. Verfahren nach Anspruch 1 oder 2, **gekennzeichnet durch** den Schritt des Zusammenstellens der physischen Datenpakete (PDP) in mehreren Datenpaketstrukturen (MPDP) zur Übertragung über das Netz (N), wobei die mehreren Strukturen (MPDP) mehrere der physischen Datenpakete (PDP) enthalten.

4. Verfahren nach Anspruch 1 oder 3, **gekennzeichnet durch** den Schritt des Übertragens der physischen Datenpakete (PDP) über das Netz (N) mit einer konstanten Paketrate.

5. Verfahren nach Anspruch 4, wobei die konstante Paketrate als ein Paket alle 125 Mikrosekunden gewählt wird.

6. Verfahren nach einem der Ansprüche 1 bis 5, wobei die Menge von Datenpaket-Informationsbit Bit enthält, die aus den Folgenden ausgewählt werden:
- Stopfnachrichtenbit,
- Alarm-Transportbit,
- Tele-Alarm-Transportbit,
- Signalsierungs-Transportbit,
- Codekorrekturbit.

7. Verfahren nach Anspruch 6, wobei die Codekorrekturbit Bit des Cyclical Redundancy Code (CRC) enthalten.

8. Kommunikationsnetz (N), das dafür ausgelegt ist, das Verfahren nach einem der Ansprüche 1 bis 7 zu implementieren.

9. Netz nach Anspruch 8, **gekennzeichnet durch** Crossconnect-Elemente (MCC) zum selektiven Schalten der in das Netz (N) eingegebenen physischen Datenpakete (PDP) zu jeweiligen Ziel-Zugangspunkten (MAP) in dem Netz (N).

10. Netz nach Anspruch 8 oder 9, **gekennzeichnet durch** Adaptationsschichtelemente (MAL), die so instanziiert werden, dass sie die Übertragung der physischen Datenpakete (PDP) über verschiedene physische Medien in dem Netz (N) verwalten.

## Revendications

1. Procédé de transmission de trafic de données multistandard (PDH, SDH, ATM, 802.x, Frame Relay, xDSL) sur un réseau de communication (N) ayant des éléments de points d'accès (MAP), le procédé incluant les étapes de :
- agencement dudit trafic de données multistandard (PDH, SDH, ATM, 802.x, Frame Relay, xDSL) en paquets de données physiques (PDP ; PDP_26, PDP_34, PDP_36, PDP_40), lesdits paquets de données physiques (PDP ; PDP_26, PDP_34, PDP_36, PDP_40) incluant un ensemble de bits d'information pour le transport dudit trafic de données multistandard et un ensemble de bits d'information de paquets de données, et
- transmission desdits paquets de données physiques (PDP ; PDP_26, PDP_34, PDP_36, PDP_40) sur ledit réseau de communication (N) ;
où les éléments de points d'accès (MAP) sont instanciés pour être en interface avec le trafic de données en fonction d'un standard donné (PDH, SDH, ATM, 802.x, Frame Relay, xDSL) ;
**caractérisé en ce que**
lesdits paquets de données physiques (PDP ; PDP_26, PDP_34, PDP_36, PDP_40) sont de types différents ayant chacun un nombre d'octets différent mais fixe.

2. Procédé selon la revendication 1,
**caractérisé par**
l'étape de prévision dans lesdits bits d'information de paquets de données d'au moins un sous-type de bit d'identification (X) pour faire une distinction entre deux agencements différents dudit trafic de données multistandard dans ledit ensemble de bits d'information, dans lequel des quantités différentes dudit trafic de données multistandard sont agencées dans ledit ensemble de bits d'information en fonction de la valeur dudit au moins un sous-type de bit d'identification (X) .

3. Procédé selon la revendication 1 ou 2,
**caractérisé par**
l'étape d'assemblage desdits paquets de données physiques (PDP) en structures de paquets de données multiples (MPDP) pour une transmission sur ledit réseau (N), lesdites structures multiples (MPDP) incluant une pluralité desdits paquets de données physiques (PDP).

4. Procédé selon la revendication 1 ou 3,
**caractérisé par**
l'étape de transmission desdits paquets de données physiques (PDP) sur ledit réseau avec un débit de paquets constant.

5. Procédé selon la revendication 4,
dans lequel ledit débit de paquets constant est choisi à hauteur de 1 paquet toutes les 125 microsecondes.

6. Procédé selon l'une des revendications 1 à 5,
dans lequel ledit ensemble de bits d'information de paquets de données inclut des bits choisis parmi :
- des bits de message de bourrage,
- des bits de transport d'alarme,
- des bits de transport de téléalarme,
- des bits de transport de signalisation,
- des bits de code de correction.

7. Procédé selon la revendication 6,
dans lequel lesdits bits de code de correction incluent des bits de code de redondance cyclique (CRC).

8. Réseau de communication (N) configuré pour mettre en oeuvre le procédé selon l'une quelconque des revendications 1 à 7.

9. Réseau selon la revendication 8,
**caractérisé par**
des éléments d'interconnexion (MCC) pour sélectivement commuter lesdits paquets de données physiques (PDP) entrés sur le réseau (N) vers des points d'accès de destination (MAP) respectifs dans le réseau (N).

10. Réseau selon la revendication 8 ou 9,
**caractérisé par**
des éléments de couche d'adaptation (MAL) instanciés pour gérer la transmission desdits paquets de données physiques (PDP) sur différents supports physiques au sein dudit réseau (N).
